# EUROPEAN PATENT APPLICATION

(11) **EP 3 648 038 A1**
(43) Date of publication of application: **06.05.2020**
(21) Application number: 18886006.8
(22) Date of filing: 24.10.2018
(51) Int. Cl.: G06Q 20/34, G06Q 20/38

(54) **WRITING AND PAYMENT METHOD, APPARATUS AND DEVICE FOR NFC PORTABLE DEVICE**

(30) Priority: 06.12.2017 CN 201711278201
(71) Applicant: Alibaba Group Holding Limited, Grand Cayman (KY)
(72) Inventor: LI, Jiajia, Zhejiang 311121 (CN)
(74) Representative: Goddar, Heinz J.
(86) International application number: PCT/CN2018/111575
(87) International publication number: WO 2019/109746

(57) **Abstract**

Implementations of the present specification disclose a writing method for a near field communication (NFC) portable device, an NFC-portable device-based payment processing method, an apparatus, and a device. The method includes: a server generates a key pair identifier associated with a user account and the key pair corresponding to the key pair identifier in advance, and an NFC writing end writes the key pair identifier and a public key corresponding to the key pair into an NFC portable device. After that, the NFC portable device can pay for an NFC communication between the NFC portable device and a consumption machine, and a server performs a deduction from the user account, where the NFC portable device is, for example, an NFC-enabled wearable device or card.

## Description

### TECHNICAL FIELD

The present specification relates to the technical field of computer software, and in particular to writing and payment methods, apparatuses and devices based on a near field communication (NFC) portable device.

### BACKGROUND

The popularity of smartphones has brought convenience to people's lives. A variety of applications on a smartphone can be used to implement various services, many of which involve payment transactions.

In the existing technology, payment is usually made by using mobile banking services or two-dimensional code scanning. These payment methods depend greatly on mobile phones, and the operation steps are tedious. Therefore, more convenient payment methods are needed based on the existing technology.

### SUMMARY

Implementations of the present specification provide writing and payment methods, apparatuses and devices for an NFC portable device to provide more convenient payment methods.

To alleviate the previous technical problem, the implementations of the present application are implemented as below.

An implementation of the present specification provides a payment method for an NFC portable device, including: obtaining, by the NFC portable device, NFC writing information, where the NFC writing information includes a key pair identifier and a public key corresponding to the key pair identifier; when entering the NFC communication range of a consumption machine, receiving expense information sent by the consumption machine; encrypting the expense information by using the public key to obtain encrypted information; and sending the encrypted information and the key pair identifier to the consumption machine, where after decrypting the encrypted information, a server deducts, based on the expense information, money from a user account that is pre-associated with the key pair identifier.

An implementation of the present specification provides a writing method for an NFC portable device, including: obtaining, by an NFC writing end, a key pair identifier associated with a user account and a public key in a key pair corresponding to the key pair identifier; and writing the key pair identifier and the public key into the NFC portable device, where the NFC portable device uses the key pair identifier and the public key to pay through the user account.

An implementation of the present specification provides another payment method for an NFC portable device, including: when the NFC portable device enters the NFC communication range of a consumption machine, sending, by the consumption machine, expense information to the NFC portable device; receiving, from the NFC portable device, a key pair identifier and encrypted information obtained by encrypting the expense information by using a public key corresponding to the key pair identifier, where the key pair identifier and the public key are written into the NFC portable device in advance; and sending the encrypted information and the key pair identifier to a server, where after decrypting the encrypted information, the server deducts, based on the expense information, money from a user account that is pre -associated with the key pair identifier.

An implementation of the present specification provides yet another payment method for an NFC portable device, including: receiving, by a server from a consumption machine, a key pair identifier and encrypted information that includes expense information, where the encrypted information is generated by the NFC portable device by using a public key corresponding to the key pair identifier, and is sent to the consumption machine by using an NFC communication method; determining, based on the key pair identifier, a private key corresponding to the key pair identifier, and decrypting the encrypted information by using the private key to obtain the expense information; and deducting, based on the expense information, money from a user account that is pre-associated with the key pair identifier.

An implementation of the present specification provides a payment apparatus for an NFC portable device. The apparatus is located in the NFC portable device and includes: an acquisition module, configured to obtain NFC writing information, where the NFC writing information includes a key pair identifier and a public key corresponding to the key pair identifier; a receiving module, configured to: when entering the NFC communication range of a consumption machine, receive expense information sent by the consumption machine; an encryption module, configured to encrypt the expense information by using the public key to obtain encrypted information; and a sending module, configured to send the encrypted information and the key pair identifier to the consumption machine, where after decrypting the encrypted information, a server deducts, based on the expense information, money from a user account that is pre-associated with the key pair identifier.

An implementation of the present specification provides a writing apparatus for an NFC portable device. The apparatus is located in an NFC writing end and includes: an acquisition module, configured to obtain a key pair identifier associated with a user account and a public key in a key pair corresponding to the key pair identifier; and a writing module, configured to write the key pair identifier and the public key into the NFC portable device, where the NFC portable device uses the key pair identifier and the public key to pay through the user account.

An implementation of the present specification provides another payment apparatus for an NFC portable device. The apparatus is located in a consumption machine, and includes: a first sending module, configured to: when the NFC portable device enters the NFC communication range of the consumption machine, send expense information to the NFC portable device; a receiving module, configured to receive, from the NFC portable device, a key pair identifier and encrypted information obtained by encrypting the expense information by using a public key corresponding to the key pair identifier, where the key pair identifier and the public key are written into the NFC portable device in advance; and a second sending module, configured to send the encrypted information and the key pair identifier to a server, where after decrypting the encrypted information, the server deducts, based on the expense information, money from a user account that is pre-associated with the key pair identifier.

An implementation of the present specification provides yet another payment apparatus for an NFC portable device. The apparatus is located in a server end and includes: a receiving module, configured to receive, from a consumption machine, a key pair identifier and encrypted information that includes expense information, where the encrypted information is generated by the NFC portable device by using a public key corresponding to the key pair identifier, and is sent to the consumption machine by using an NFC communication method; a determining module, configured to determine, based on the key pair identifier, a private key corresponding to the key pair identifier, and decrypt the encrypted information by using the private key to obtain the expense information; and a deduction module, configured to deduct, based on the expense information, money from a user account that is pre-associated with the key pair identifier.

An implementation of the present specification provides a payment device for an NFC portable device. The device is an NFC portable device and includes: at least one processor; and at least one memory communicatively connected to the at least one processor; where the memory stores an instruction that can be executed by the at least one processor, and the instruction is executed by the at least one processor to enable the at least one processor to: obtain NFC writing information, where the NFC writing information includes a key pair identifier and a public key corresponding to the key pair identifier; when entering the NFC communication range of a consumption machine, receive expense information sent by the consumption machine; encrypt the expense information by using the public key to obtain encrypted information; and send the encrypted information and the key pair identifier to the consumption machine, where after decrypting the encrypted information, a server deducts, based on the expense information, money from a user account that is pre-associated with the key pair identifier.

An implementation of the present specification provides a writing device for an NFC portable device. The device is an NFC writing end and includes: at least one processor; and at least one memory communicatively connected to the at least one processor; where the memory stores an instruction that can be executed by the at least one processor, and the instruction is executed by the at least one processor to enable the at least one processor to: obtain a key pair identifier associated with a user account and a public key in a key pair corresponding to the key pair identifier; and write the key pair identifier and the public key into the NFC portable device, where the NFC portable device uses the key pair identifier and the public key to pay through the user account.

An implementation of the present specification provides another payment device for an NFC portable device. The device is a consumption machine and includes: at least one processor; and at least one memory communicatively connected to the at least one processor; where the memory stores an instruction that can be executed by the at least one processor, and the instruction is executed by the at least one processor to enable the at least one processor to: when the NFC portable device enters an NFC communication range of the consumption machine, send expense information to the NFC portable device; receive, from the NFC portable device, a key pair identifier and encrypted information obtained by encrypting the expense information by using a public key corresponding to the key pair identifier, where the key pair identifier and the public key are written into the NFC portable device in advance; and send the encrypted information and the key pair identifier to a server, where after decrypting the encrypted information, the server deducts, based on the expense information, money from a user account that is pre-associated with the key pair identifier.

An implementation of the present specification provides yet another payment device for an NFC portable device. The device is a consumption machine and includes: at least one processor; and at least one memory communicatively connected to the at least one processor; where the memory stores an instruction that can be executed by the at least one processor, and the instruction is executed by the at least one processor to enable the at least one processor to: receive, from the consumption machine, a key pair identifier and encrypted information that includes expense information, where the encrypted information is generated by the NFC portable device by using a public key corresponding to the key pair identifier, and is sent to the consumption machine by using an NFC communication method; determine, based on the key pair identifier, a private key corresponding to the key pair identifier, and decrypt the encrypted information by using the private key to obtain the expense information; and deduct, based on the expense information, money from a user account that is pre-associated with the key pair identifier.

The above-mentioned at least one technical solution adopted in the implementations of the present specification can achieve the following beneficial effects: Payment operations are more convenient and do not necessarily depend on mobile phones and NFC portable devices, such as NFC-enabled wearable devices or cards. Moreover, even if the NFC portable device is lost, the association between a corresponding key pair identifier and a user account can be conveniently canceled, so the NFC portable device cannot pay through the user account and the user's fund security is ensured.

### BRIEF DESCRIPTION OF DRAWINGS

To describe technical solutions in implementations of the present specification or in the existing technology more clearly, the following briefly describes the accompanying drawings needed for describing the implementations or the existing technology. Apparently, the accompanying drawings in the following descriptions merely show some implementations of the present specification, and a person of ordinary skill in the art can still derive other drawings from these accompanying drawings without creative efforts.
FIG. 1 is a schematic diagram illustrating an overall architecture involved in a practical application scenario of a solution of the present specification;
FIG. 2 is a schematic flowchart illustrating a payment method for an NFC portable device, according to an implementation of the present specification;
FIG. 3 is a schematic flowchart illustrating a writing method for an NFC portable device, according to an implementation of the present specification;
FIG. 4 is a schematic flowchart illustrating another payment method for an NFC portable device, according to an implementation of the present specification;
FIG. 5 is a schematic flowchart illustrating yet another payment method for an NFC portable device, according to an implementation of the present specification;
FIG. 6 is a schematic structural diagram illustrating a payment apparatus for an NFC portable device corresponding to FIG. 2, according to an implementation of the present specification;
FIG. 7 is a schematic structural diagram illustrating a writing apparatus for an NFC portable device corresponding to FIG. 3, according to an implementation of the present specification;
FIG. 8 is a schematic structural diagram illustrating a payment apparatus for an NFC portable device corresponding to FIG. 4, according to an implementation of the present specification;
FIG. 9 is a schematic structural diagram illustrating a payment apparatus for an NFC portable device corresponding to FIG. 5, according to an implementation of the present specification.

### DESCRIPTION OF IMPLEMENTATIONS

The implementations of the present specification provide writing and payment methods, apparatuses and devices for an NFC portable device.

To make a person skilled in the art better understand the technical solutions in the present specification, the following clearly and comprehensively describes the technical solutions in the implementations of the present specification with reference to the accompanying drawings in the implementations of the present specification. Apparently, the described implementations are merely some rather than all of the implementations of the present specification. All other implementations obtained by a person of ordinary skill in the art based on the implementations of the present application without creative efforts shall fall within the protection scope of the present application.

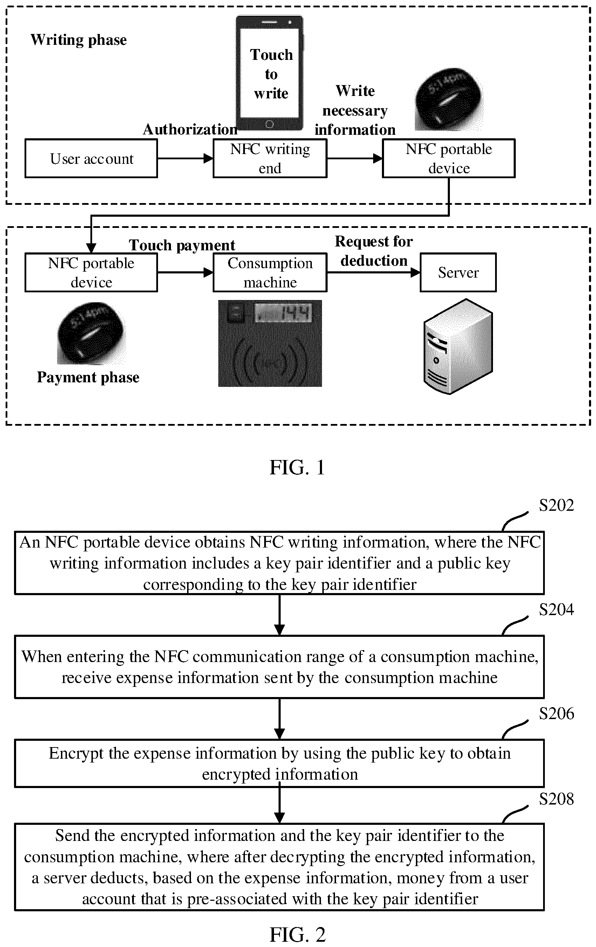

FIG. 1 is a schematic diagram illustrating an overall architecture involved in a practical application scenario of a solution of the present specification. The overall architecture mainly involves four parts: NFC portable devices (such as a smart band), NFC writing ends (such as a smartphone), consumption machines (such as a cash register), and servers (such as a payment server).

The workflow mainly consists of two phases: writing phase and payment phase. The writing phase is the initialization phase when the NFC portable device is enabled. In the writing phase, based on user account authorization, the NFC writing end can write the information needed for payment into the NFC portable device, and the written information can be obtained from the server. After writing, the NFC portable device can make payment. For example, the NFC portable device performs NFC communication by touching the consumption machine to exchange information for payment. The consumption machine communicates with the server based on the result of exchanging information, and requests the server to perform a deduction to complete the payment.

The following describes the solution in detail from the perspectives of the NFC portable device, the NFC writing end, the consumption machine and the server.

FIG. 2 is a schematic flowchart illustrating a payment method for an NFC portable device, according to an implementation of the present specification. The execution body is the NFC portable device.

The process in FIG. 2 can include the following steps:
S202: The NFC portable device obtains NFC writing information, where the NFC writing information includes a key pair identifier and a public key corresponding to the key pair identifier.

In the implementation of the present specification, the NFC portable device can be a device other than a mobile phone, and is preferably an NFC-enabled wearable device or a card, such as a smart watch, a smart band, a smart ring, a smart button, or a smart card.

It is worthwhile to note that the NFC portable device itself can be unpowered, so the NFC portable device has a better applicability without worrying that the device can run out of power and cannot work (mobile phone payment has this problem). Of course, in this case, the NFC portable device should still support calculation function, for example, the NFC portable device can be a card containing a coil, which can be activated by another charged device, such as the consumption machine. The card can calculate by using the energy generated by coil activation.

In the implementation of the present specification, the key pair identifier and the key pair corresponding to the key pair identifier are associated with a specified user account. Based on the authority of the user account, the key pair identifier and the public key corresponding to the key pair identifier are written into the NFC portable device. After they are written, the user can conveniently perform NFC payment by using the NFC portable device without having to perform relatively cumbersome actions such as login or scanning a QR code, and the money to be paid will be deducted from the user account.

The association relationship can be canceled according to the request of the user or the automatic policy of the server, which helps prevent the NFC portable device from being used by others. One user account can be associated with multiple key pair identifiers at the same time, and therefore support multiple NFC portable devices at the same time.

In the implementation of the present specification, the public key is used to encrypt information needed for the NFC portable device such as expense information during payment, the private key in the key pair can be stored at the server for decryption, and the key pair identifier is used to search the private key needed for decryption. Usually, the server is a payment server.

Based on the key pair identifier, the key pair can be uniquely determined within a certain range. For example, one user account can be associated with multiple key pair identifiers, where each key pair identifier is usually unique among the multiple key pair identifiers, but not necessarily globally unique. For another example, each key pair identifier can also be unique in all key pair identifiers associated with all user accounts; etc. The scope of uniqueness can be determined based on actual business needs.

The generation methods of key pair identifiers are not limited here, for example, key pairs can be generated by performing a hash calculation on the at least one of the public or private key corresponding to the key pair identifier.

S204: When entering the NFC communication range of the consumption machine, receive expense information sent by the consumption machine.

In the implementation of the present specification, the consumption machine can be an NFC-enabled cash register, a point-of-sale terminal (POS) machine, etc. When payment is needed, the user can make the NFC portable device close to the consumption machine (for example, touch the consumption machine with a smart band), so the NFC portable device and the consumption machine perform corresponding NFC communication, and send and receive the information needed for payment.

S206: Encrypt the expense information by using the public key to obtain encrypted information.

In the implementation of the present specification, the encrypted information can further include more information other than the expense information, such as account identification information, a current time, etc. The account identification information can be an account identification code, an account alias, etc.

S208: Send the encrypted information and the key pair identifier to the consumption machine where after decrypting the encrypted information, a server deducts, based on the expense information, money from a user account that is pre-associated with the key pair identifier.

In the implementation of the present specification, after receiving the encrypted information and the key pair identifier, the consumption machine can directly send the encrypted information and the key pair identifier to the server, or perform certain processing and then send the encrypted information to the server. The processing is, for example, adding additional business scenario data, formatting and performing secondary encryption on at least one of the encrypted information or the key pair identifier, etc.

The server can find the corresponding private key based on the key pair identifier, and then decrypt the encrypted information. The server can determine the user account based on the key pair identifier; or, if the information obtained from the consumption machine carries the account identification information, the user account can also be determined based on the account identification information.

In the implementation of the present specification, to further improve payment security, a user verification action can also be added in the previous steps. For example, before the NFC portable device encrypts or sends the information to the consumption machine, fingerprint or password of the user can be verified, and the execution process can then be continued if the verification is passed.

In the method of FIG. 2, payment operations are more convenient and do not necessarily depend on mobile phones, NFC portable devices such as an NFC-enabled wearable device or a card. Moreover, even if the NFC portable device is lost, the association between the corresponding key pair identifier and the user account can be conveniently canceled, so the NFC portable device cannot pay through the user account and the user's fund security is ensured.

Based on the method of FIG. 2, the implementation of the present specification also provide some specific solutions of the method, as well as extended solutions, which are described below.

In the implementation of the present specification, a common NFC writing end is, for example, a mobile phone of the user. When the user is ready to enable an NFC portable device, the user can log in to a payment application on the mobile phone by using a user account, and then request to-be-written information from the server. In response to the request, the server can generate a new key pair (such as an RSA key pair) and identifier of the key pair, and associate them with the user account. The association here can be a directly association with the user account or can also be an association with account identification information of the user account. Further, the server sends the key pair identifier and the public key corresponding to the key pair identifier to the mobile phone, and can also send the account identification information to the mobile phone. The mobile phone writes the key pair identifier and the public key corresponding to the key pair identifier and the account identification information into the NFC portable device based on the permission of the user account.

It is worthwhile to note that the device logged in by the user and the NFC writing end can also be different. In this case, the logged in device can request the server, and then authorize the NFC writing end to perform a writing action.

In the implementation of specification, based on the previous analysis, for step S202, the server can generate the key pair identifier and the corresponding key pair in advance, and send the key pair identifier and the public key in the key pair. Then the NFC writing end writes the sent information into the NFC portable device.

Further, the NFC writing information can further include the account identification information of the user account associated with the key pair identifier. In this case, for step S208, sending the encrypted information and the key pair identifier to the consumption machine can further include: sending the account identification information to the consumption machine for the server to find a private key used for the decryption in the key pair.

If the key pair identifier is globally unique, the server can use the key pair identifier to find the corresponding private key directly, which can consume lots of resources. To alleviate this problem, the server can use the account identification information to find associated key pair identifiers, which effectively narrows the search range, and then find the current key pair identifier in the key pair identifiers so as to finally find the corresponding private key. Therefore, efficiency is higher as fewer resources are consumed.

In the implementation of the present specification, to improve security, a timeliness verification can also be added during payment. For example, for step S206, encrypting the expense information by using the public key to obtain the encrypted information can include: obtaining a current time; encrypting the expense information and the current time by using the public key to obtain the encrypted information. The current time is used by the server to perform timeliness verification before the deduction.

The server compares the current time obtained after successful decryption with the server time. If the time difference is within a determined threshold, the current time is valid and deduction can be performed. Otherwise, the current payment can be rejected.

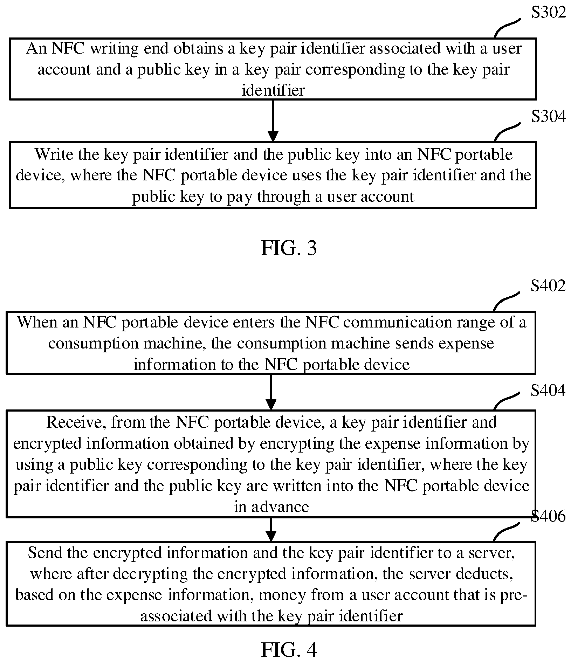

Based on the same idea, an implementation of the present specification further provides a schematic flowchart illustrating a writing method for an NFC portable device. The execution body is an NFC writing end. As shown in FIG. 3, the process can include the following steps: S302: The NFC writing end obtains a key pair identifier associated with a user account and a public key in a key pair corresponding to the key pair identifier.

S304: Write the key pair identifier and the public key into an NFC portable device, where the NFC portable device uses the key pair identifier and the public key to pay through a user account.

In the implementation of the present specification, if the NFC writing end is a device where a user logs in, for step S302, that the NFC writing end obtains the key pair identifier associated with the user account and the public key in the key pair corresponding to the key pair identifier can specifically include: requesting a server to generate the key pair identifier associated with the user account and the key pair corresponding to the key pair identifier; receiving the key pair identifier and the public key in the key pair returned by the server, when the NFC portable device pays through the user account, deduction is made by the server.

In the implementation of the present specification, for step S302, that the NFC writing end obtains the key pair identifier associated with the user account and the public key in the key pair corresponding to the key pair identifier can further include: obtaining account identification information of the user account. Accordingly, for step S304, writing the key pair identifier and the public key into the NFC portable device can further include: writing the account identification information into the NFC portable device for the server to find a private key for the deduction in the key pair.

In the implementation of the present specification, when the user lost the NFC portable device, the user can request, by using the device that the user account was logged in or the previously mentioned NFC writing end, the server to cancel the association relationship between the user account and the key pair identifier. If the association relationship is canceled, the corresponding NFC portable device cannot successfully pay based on the key pair identifier, thereby preventing the NFC portable device from being used by others.

Based on the same idea, an implementation of the present specification further provides a schematic flowchart illustrating another payment method for an NFC portable device. The execution body is a consumption machine. As shown in FIG. 4, the process can include the following steps:
S402: When the NFC portable device enters the NFC communication range of the consumption machine, the consumption machine sends expense information to the NFC portable device.

S404: Receive, from the NFC portable device, a key pair identifier and encrypted information obtained by encrypting the expense information by using a public key corresponding to the key pair identifier, where the key pair identifier and the public key are written into the NFC portable device in advance.

S406: Send the encrypted information and the key pair identifier to a server, where after decrypting the encrypted information, the server deducts, based on the expense information, money from a user account that is pre-associated with the key pair identifier.

In the implementation of the present specification, for step S404, the receiving, from the NFC portable device, a key pair identifier and encrypted information obtained by encrypting the expense information by using a public key corresponding to the key pair identifier can further include: receiving account identification information of the user account sent by the NFC portable device. The account identification information is written into the NFC portable device in advance. Accordingly, for step S406, the sending the encrypted information and the key pair identifier to a server can further include: sending the account identification information to the server for finding a private key for the decryption in the key pair.

In the implementation of the present specification, for step S406, the sending the encrypted information and the key pair identifier to a server can further include: sending corresponding business scenario information to the server to generate a corresponding business receipt.

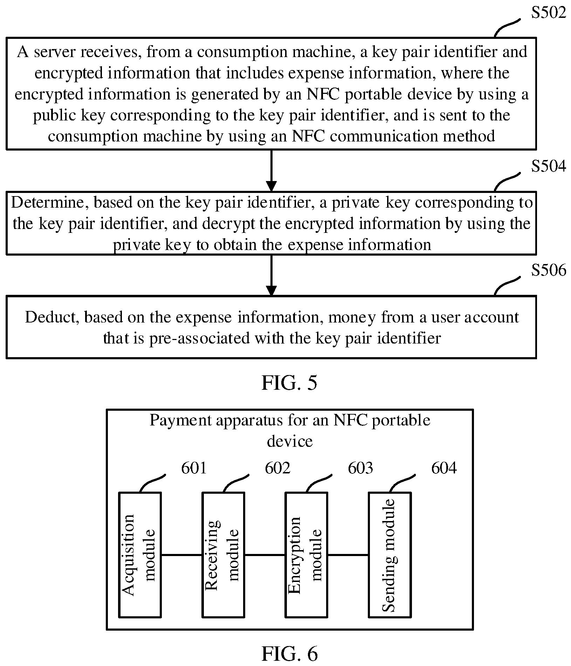

Based on the same idea, an implementation of the present specification further provides a schematic flowchart illustrating yet another payment method for an NFC portable device. The execution body is a server. As shown in FIG. 5, the process can include the following steps:
S502: The server receives, from a consumption machine, a key pair identifier and encrypted information that includes expense information, where the encrypted information is generated by the NFC portable device by using a public key corresponding to the key pair identifier, and is sent to the consumption machine by using an NFC communication method.

S504: Determine, based on the key pair identifier, a private key corresponding to the key pair identifier, and decrypt the encrypted information by using the private key to obtain the expense information.

S506: Deduct, based on the expense information, money from a user account that is pre-associated with the key pair identifier.

In the implementation of the present specification, for step S502, before the server receives, from a consumption machine, a key pair identifier and encrypted information that includes expense information, the method can further include: generating the key pair identifier and the corresponding key pair in advance and associating the key pair identifier and the corresponding key pair with the user account, and sending the key pair identifier and the public key of the key pair to an NFC writing end, so the NFC writing end writes the sent information into the NFC portable device.

In the implementation of the present specification, for step S502, before the server receives, from a consumption machine, a key pair identifier and encrypted information that includes expense information, the method can further include: receiving account identification information of the user account sent by the consumption machine. The account identification information is sent by the NFC portable device to the consumption machine by using an NFC communication method. Correspondingly, for step S504, the determining, based on the key pair identifier, a private key corresponding to the key pair identifier can include: determining, based on the account identification information, key pair identifiers corresponding to the user account, and determining, based on the key pair identifiers and the key pair identifier sent by the consumption machine, the private key corresponding to the key pair identifier sent by the consumption machine.

In the implementation of the present specification, the encrypted information further includes a current time obtained by the NFC portable device. In this case, for step S506, the encrypted information further includes the current time obtained by the NFC portable device. Before the deducting, based on the expense information, money from a user account that is pre-associated with the key pair identifier, the method can further include: determining effectiveness of the current time based on the time of the server; where if yes, deduction can be made; otherwise, current payment can be rejected.

Based on the same idea, an implementation of the present specification further provides apparatuses corresponding to the previous methods, as shown in FIG. 6 to FIG. 9, where the dashed boxes represent optional modules.

FIG. 6 is a schematic structural diagram illustrating a payment apparatus for an NFC portable device corresponding to FIG. 2, according to an implementation of the present specification. The apparatus is located in the NFC portable device and includes: an acquisition module 601, configured to obtain NFC writing information, where the NFC writing information includes a key pair identifier and a public key corresponding to the key pair identifier; a receiving module 602, configured to: when entering the NFC communication range of a consumption machine, receive expense information sent by the consumption machine; an encryption module 603, configured to encrypt the expense information by using the public key to obtain encrypted information; and a sending module 604, configured to send the encrypted information and the key pair identifier to the consumption machine, where after decrypting the encrypted information, a server deducts, based on the expense information, money from a user account that is pre-associated with the key pair identifier.

Optionally, the server generates in advance the key pair identifier and the key pair corresponding to the key pair identifier, and sends the key pair identifier and the public key in the key pair. Then, an NFC writing end writes the sent information into the NFC portable device.

Optionally, the NFC writing information further includes account identification information of the user account associated with the key pair identifier; and that the sending module 604 sends the encrypted information and the key pair identifier to the consumption machine further includes: the sending module 604 sends the account identification information to the consumption machine for the server to find a private key used for the decryption in the key pair.

Optionally, that the encryption module 603 encrypts the expense information by using the public key to obtain the encrypted information includes: the encryption module 603 obtains a current time; and encrypts the expense information and the current time by using the public key to obtain the encrypted information; where the current time is used by the server to perform timeliness verification before the deduction.

Optionally, the NFC portable device is an NFC-enabled wearable device or a card.

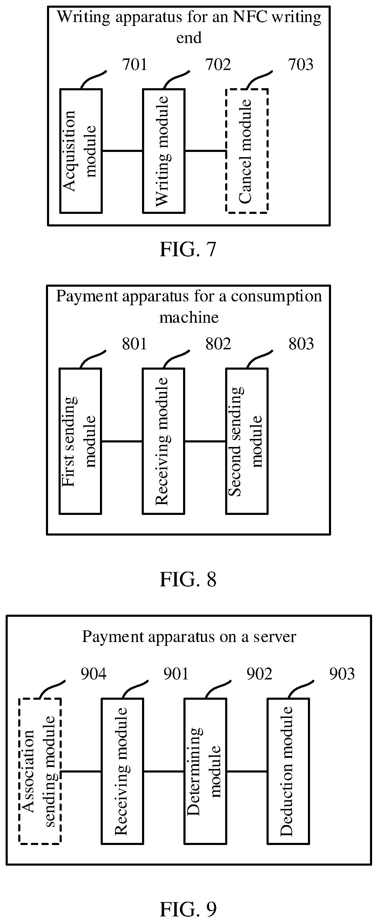

FIG. 7 is a schematic structural diagram illustrating a writing apparatus for an NFC portable device corresponding to FIG. 3, according to an implementation of the present specification. The apparatus is located in an NFC writing end and includes: an acquisition module 701, configured to obtain a key pair identifier associated with a user account and a public key in a key pair corresponding to the key pair identifier; and a writing module 702, configured to write the key pair identifier and the public key into the NFC portable device, where the NFC portable device uses the key pair identifier and the public key to pay through the user account.

Optionally, the acquisition module 701 obtains the key pair identifier associated with the user account and the public key in the key pair corresponding to the key pair identifier includes: the acquisition module 701 requests a server to generate the key pair identifier associated with the user account and the key pair corresponding to the key pair identifier; and receives the key pair identifier and the public key in the key pair returned by the server; when the NFC portable device pays through the user account, deduction is made by the server.

Optionally, the acquisition module 701 obtains the key pair identifier associated with the user account and the public key in the key pair corresponding to the key pair identifier further includes: the acquisition module 701 obtains account identification information of the user account; and the writing module 702 writes the key pair identifier and the public key into the NFC portable device further includes: the writing module 702 writes the account identification information into the NFC portable device for the server to find a private key in the key pair for the deduction.

Optionally, the apparatus further includes: a cancel module 703, configured to request the server to cancel the association relationship between the user account and the key pair identifier, if the association relationship is canceled, the NFC portable device cannot successfully pay based on the key pair identifier.

FIG. 8 is a schematic structural diagram illustrating a payment apparatus for an NFC portable device corresponding to FIG. 4, according to an implementation of the present specification. The apparatus is located in a consumption machine and includes: a first sending module 801, configured to: when the NFC portable device enters the NFC communication range of the consumption machine, send expense information to the NFC portable device; a receiving module 802, configured to receive, from the NFC portable device, a key pair identifier and encrypted information obtained by encrypting the expense information by using a public key corresponding to the key pair identifier, where the key pair identifier and the public key are written into the NFC portable device in advance; and a second sending module 803, configured to send the encrypted information and the key pair identifier to a server, where after decrypting the encrypted information, the server deducts, based on the expense information, money from a user account that is pre-associated with the key pair identifier.

Optionally, that the receiving module 802 receives, from the NFC portable device, the key pair identifier and the encrypted information obtained by encrypting the expense information by using the public key corresponding to the key pair identifier further includes: the receiving module 802 receives account identification information of the user account sent by the NFC portable device, where the account identification information is written into the NFC portable device in advance; and that the second sending module 803 sends the encrypted information and the key pair identifier to the server further includes: the second sending module 803 sends the account identification information to the server for finding a private key for the decryption in the key pair.

Optionally, that the second sending module 803 sends the encrypted information and the key pair identifier to the server further includes: the second sending module 803 sends corresponding business scenario information to the server to generate a corresponding business receipt.

FIG. 9 is a schematic structural diagram illustrating a payment apparatus for an NFC portable device corresponding to FIG. 5, according to an implementation of the present specification. The apparatus is located in a server and includes: a receiving module 901, configured to receive, from a consumption machine, a key pair identifier and encrypted information that includes expense information, where the encrypted information is generated by the NFC portable device by using a public key corresponding to the key pair identifier, and is sent to the consumption machine by using an NFC communication method; a determining module 902, configured to determine, based on the key pair identifier, a private key corresponding to the key pair identifier, and decrypt the encrypted information by using the private key to obtain the expense information; and a deduction module 903, configured to deduct, based on the expense information, money from a user account that is pre-associated with the key pair identifier.

Optionally, the apparatus further includes: an association sending module 904, configured to: before the receiving module 901 receives, from the consumption machine, the key pair identifier and the encrypted information that includes the expense information, generate in advance the key pair identifier and the corresponding key pair, and associate the key pair identifier and the corresponding key pair with the user account; and send the key pair identifier and the public key in the key pair to an NFC writing end, so the NFC writing end writes the sent information into the NFC portable device.

Optionally, the receiving module 901 receives, from the consumption machine, the key pair identifier and the encrypted information that includes the expense information further includes: the receiving module 901 receives account identification information of the user account sent by the consumption machine, where the account identification information is sent by the NFC portable device to the consumption machine by using the NFC communication method.

That the determining module 902 determines, based on the key pair identifier, the private key corresponding to the key pair identifier includes: the determining module 902 determines, based on the account identification information, key pair identifiers corresponding to the user account; and determines, based on the key pair identifiers and the key pair identifier sent by the consumption machine, the private key corresponding to the key pair identifier sent by the consumption machine.

Optionally, the encrypted information further includes a current time obtained by the NFC portable device; and before deducting, based on the expense information, money from the user account that is pre-associated with the key pair identifier, the deduction module 903 further performs the following: the deduction module 903 determines effectiveness of the current time based on the time of the server.

Based on the same idea, an implementation of the present specification also provides a payment device for an NFC portable device corresponding to FIG. 2. The device is the NFC portable device and includes: at least one processor; and at least one memory communicatively connected to the at least one processor; where the memory stores an instruction that can be executed by the at least one processor, and the instruction is executed by the at least one processor to enable the at least one processor to: obtain NFC writing information, where the NFC writing information includes a key pair identifier and a public key corresponding to the key pair identifier; when entering the NFC communication range of a consumption machine, receive expense information sent by the consumption machine; encrypt the expense information by using the public key to obtain encrypted information; and send the encrypted information and the key pair identifier to the consumption machine, where after decrypting the encrypted information, a server deducts, based on the expense information, money from a user account that is pre-associated with the key pair identifier.

Based on the same idea, an implementation of the present specification further provides a writing device for an NFC portable device corresponding to FIG. 3 The device is an NFC writing end and includes: at least one processor; and at least one memory communicatively connected to the at least one processor; where the memory stores an instruction that can be executed by the at least one processor, and the instruction is executed by the at least one processor to enable the at least one processor to: obtain a key pair identifier associated with a user account and a public key in a key pair corresponding to the key pair identifier; and write the key pair identifier and the public key into the NFC portable device, where the NFC portable device uses the key pair identifier and the public key to pay through the user account.

Based on the same idea, an implementation of the present specification also provides a payment device for an NFC portable device corresponding to FIG. 4. The device is a consumption machine and includes: at least one processor; and at least one memory communicatively connected to the at least one processor; where the memory stores an instruction that can be executed by the at least one processor, and the instruction is executed by the at least one processor to enable the at least one processor to: when the NFC portable device enters an NFC communication range of the consumption machine, send expense information to the NFC portable device; receive, from the NFC portable device, a key pair identifier and encrypted information obtained by encrypting the expense information by using a public key corresponding to the key pair identifier, where the key pair identifier and the public key are written into the NFC portable device in advance; and send the encrypted information and the key pair identifier to a server, where after decrypting the encrypted information, the server deducts, based on the expense information, money from a user account that is pre-associated with the key pair identifier.

Based on the same idea, an implementation of the present specification also provides a payment device for an NFC portable device corresponding to FIG. 5. The device is a consumption machine and includes: at least one processor; and at least one memory communicatively connected to the at least one processor; where the memory stores an instruction that can be executed by the at least one processor, and the instruction is executed by the at least one processor to enable the at least one processor to: receive, from the consumption machine, a key pair identifier and encrypted information that includes expense information, where the encrypted information is generated by the NFC portable device by using a public key corresponding to the key pair identifier, and is sent to the consumption machine by using an NFC communication method; determine, based on the key pair identifier, a private key corresponding to the key pair identifier, and decrypt the encrypted information by using the private key to obtain the expense information; and deduct, based on the expense information, money from a user account that is pre-associated with the key pair identifier.

Based on the same idea, an implementation of the present specification also provides a non-volatile computer storage medium corresponding to FIG. 2. A computer executable instruction is stored in the medium and is used to: obtain NFC writing information, where the NFC writing information includes a key pair identifier and a public key corresponding to the key pair identifier; when entering the NFC communication range of a consumption machine, receive expense information sent by the consumption machine; encrypt the expense information by using the public key to obtain encrypted information; and send the encrypted information and the key pair identifier to the consumption machine, where after decrypting the encrypted information, a server deducts, based on the expense information, money from a user account that is pre-associated with the key pair identifier.

Based on the same idea, an implementation of the present specification also provides a non-volatile computer storage medium corresponding to FIG. 3. A computer executable instruction is stored in the medium and is used to: obtain a key pair identifier associated with a user account and a public key in a key pair corresponding to the key pair identifier; and write the key pair identifier and the public key into an NFC portable device so the NFC portable device can pay through the user account.

Based on the same idea, an implementation of the present specification also provides a non-volatile computer storage medium corresponding to FIG. 4. A computer executable instruction is stored in the medium and is used to: send consumption amount information to the NFC portable device when the NFC portable device enters the NFC communication range; receive, from the NFC portable device, a key pair identifier and encrypted information obtained by encrypting the expense information by using a public key corresponding to the key pair identifier, where the key pair identifier and the public key are written into the NFC portable device in advance; and send the encrypted information and the key pair identifier to a server, where after decrypting the encrypted information, the server deducts, based on the expense information, money from a user account that is pre-associated with the key pair identifier.

Based on the same idea, an implementation of the present specification also provides a non-volatile computer storage medium corresponding to FIG. 5. A computer executable instruction is stored in the medium and is used to: receive, from a consumption machine, a key pair identifier and encrypted information that includes expense information, where the encrypted information is generated by an NFC portable device by using a public key corresponding to the key pair identifier, and is sent to the consumption machine by using an NFC communication method; determine, based on the key pair identifier, a private key corresponding to the key pair identifier, and decrypt the encrypted information by using the private key to obtain the expense information; and deduct, based on the expense information, money from a user account that is pre-associated with the key pair identifier.

Specific implementations of the present application are described above. Other implementations fall within the scope of the appended claims. In some situations, the actions or steps described in the claims can be performed in an order different from the order in the implementations and the desired results can still be achieved. In addition, the process depicted in the accompanying drawings does not necessarily require a particular execution order to achieve the desired results. In some implementations, multi-tasking and parallel processing can be advantageous.

The implementations in the present specification are all described in a progressive method. For same or similar parts in the implementations, refer to these implementations. Each implementation focuses on a difference from other implementations. Especially, an apparatus implementation, a device implementation, and a non-volatile computer storage medium implementation are basically similar to a method implementation, and therefore are described briefly; for related parts, reference is made to partial descriptions in the method implementation.

The apparatus, the device, and the non-volatile computer storage medium provided in the implementations of the present application are in a one-to-one correspondence with the methods. Therefore, the apparatus, the device, and the non-volatile computer storage medium also have beneficial technical effects similar to those of the methods. Because the beneficial technical effects of the methods have been described in detail, the beneficial technical effects of the corresponding apparatus, device, and non-volatile computer storage medium are omitted here.

In the 1990s, whether a technical improvement is a hardware improvement (for example, an improvement to circuit structures, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, such programming is mostly implemented by using "logic compiler" software. The logic compiler software is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented by using any appropriate method. For example, the controller can be a microprocessor or a processor, or a computer-readable medium that stores computer readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using the computer readable program code, logic programming can be performed on method steps to allow the controller to implement the same function in forms of the logic gate, the switch, the application-specific integrated circuit, the programmable logic controller, and the built-in microcontroller. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

The system, apparatus, module, or unit illustrated in the previous implementations can be implemented by a computer chip or an entity, or can be implemented by a product with a specified function. A typical implementation device is a computer. The computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the apparatus above is described by dividing functions into various units. Certainly, when the present specification is implemented, a function of each unit can be implemented in one or more pieces of software and/or hardware.

A person skilled in the art should understand that an implementation of the present specification can be provided as a method, a system, or a computer program product. Therefore, the implementations of the present specification can use a form of hardware only implementations, software only implementations, or implementations with a combination of software and hardware. Moreover, the implementation of the present specification can use a form of a computer program product that is implemented on one or more computer-usable storage media (including but not limited to a disk memory, a CD-ROM, an optical memory, etc.) that include computer-usable program code.

The present specification is described with reference to the flowcharts and/or block diagrams of the method, the device (system), and the computer program product based on one or more implementations of the present specification. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate a device for implementing a specific function in one or more processes in the flowcharts and/or in one or more blocks in the block diagrams.

These computer program instructions can be stored in a computer readable memory that can instruct the computer or the another programmable data processing device to work in a specific way, so the instructions stored in the computer readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so a series of operations and operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a calculating device includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device. The computer storage medium can be used to store information accessible by the calculating device. Based on the definition in the present specification, the computer readable medium does not include transitory computer readable media (transitory media) such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

A person skilled in the art should understand that the implementations of the present specification can be provided as a method, a system, or a computer program product. Therefore, the present specification can use a form of hardware only implementations, software only implementations, or implementations with a combination of software and hardware. In addition, the present specification can use a form of a computer program product that is implemented on one or more computer-usable storage media (including but not limited to a disk memory, a CD-ROM, an optical memory, etc.) that include computer-usable program code.

The present specification can be described in the general context of computer executable instructions executed by a computer, for example, a program module. Generally, the program module includes a routine, a program, an object, a component, a data structure, etc. executing a specific task or implementing a specific abstract data type. The present specification can also be practiced in distributed computing environments. In the distributed computing environments, tasks are performed by remote processing devices connected through a communications network. In a distributed computing environment, the program module can be located in both local and remote computer storage media including storage devices.

The implementations in the present specification are all described in a progressive method. For same or similar parts in the implementations, refer to these implementations. Each implementation focuses on a difference from other implementations. Particularly, a system implementation is basically similar to a method implementation, and therefore, is described briefly. For related parts, references can be made to related descriptions in the method implementation.

The previous are merely implementations of the present specification, and are not intended to limit the present application. A person skilled in the art can make various modifications and changes to the present application. Any modification, equivalent replacement, or improvement made without departing from the spirit and principle of the present application shall fall within the scope of the claims in the present application.

## Claims

1. A payment method for a near field communication (NFC) portable device, comprising:
obtaining, by the NFC portable device, NFC writing information, wherein the NFC writing information comprises a key pair identifier and a public key corresponding to the key pair identifier;
when entering the NFC communication range of a consumption machine, receiving expense information sent by the consumption machine;
encrypting the expense information by using the public key to obtain encrypted information; and
sending the encrypted information and the key pair identifier to the consumption machine, wherein after decrypting the encrypted information, a server deducts, based on the expense information, money from a user account that is pre-associated with the key pair identifier.

2. The method according to claim 1, wherein the server generates in advance the key pair identifier and a key pair corresponding to the key pair identifier, and sends the key pair identifier and the public key in the key pair, and wherein an NFC writing end writes the sent information into the NFC portable device.

3. The method according to claim 1, wherein the NFC writing information further comprises account identification information of the user account associated with the key pair identifier, and wherein sending the encrypted information and the key pair identifier to the consumption machine further comprises:
sending the account identification information to the consumption machine for the server to find a private key for the decryption in the key pair.

4. The method according to claim 1, wherein the encrypting the expense information by using the public key to obtain encrypted information comprises:
obtaining a current time; and
encrypting the expense information and the current time by using the public key to obtain the encrypted information, wherein the current time is used by the server to perform timeliness verification before the deduction.

5. The method according to any one of claims 1 to 4, wherein the NFC portable device is an NFC-enabled wearable device or a card.

6. A writing method for a near field communication NFC portable device, comprising:
obtaining, by an NFC writing end, a key pair identifier associated with a user account and a public key in a key pair corresponding to the key pair identifier; and
writing the key pair identifier and the public key into the NFC portable device, wherein the NFC portable device uses the key pair identifier and the public key to pay through the user account.

7. The method according to claim 6, wherein the obtaining a key pair identifier associated with a user account and a public key in a key pair corresponding to the key pair identifier comprises:
requesting a server to generate the key pair identifier associated with the user account and the key pair corresponding to the key pair identifier; and
receiving the key pair identifier and the public key in the key pair returned by the server;
wherein when the NFC portable device pays through the user account, deduction is made by the server.

8. The method according to claim 7, wherein the obtaining a key pair identifier associated with a user account and a public key in a key pair corresponding to the key pair identifier further comprises:
obtaining account identification information of the user account; and
the writing the key pair identifier and the public key into the NFC portable device further comprises:
writing the account identification information into the NFC portable device for the server to find a private key for the deduction in the key pair.

9. The method according to claim 6, further comprising:
requesting the server to cancel the association relationship between the user account and the key pair identifier, wherein if the association relationship is canceled, the NFC portable device cannot successfully pay based on the key pair identifier.

10. A payment method based on a near field communication NFC portable device, comprising:
when the NFC portable device enters the NFC communication range of a consumption machine, sending, by the consumption machine, expense information to the NFC portable device;
receiving, from the NFC portable device, a key pair identifier and encrypted information obtained by encrypting the expense information by using a public key corresponding to the key pair identifier, wherein the key pair identifier and the public key are written into the NFC portable device in advance; and
sending the encrypted information and the key pair identifier to a server, wherein after decrypting the encrypted information, the server deducts, based on the expense information, money from a user account that is pre-associated with the key pair identifier.

11. The method according to claim 10, wherein the receiving a key pair identifier and encrypted information obtained by encrypting the expense information by using a public key corresponding to the key pair identifier further comprises:
receiving account identification information of the user account sent by the NFC portable device, wherein the account identification information is written into the NFC portable device in advance; and
the sending the encrypted information and the key pair identifier to a server further comprises:
sending the account identification information to the server for finding a private key for the decryption in the key pair.

12. The method according to claim 10, wherein the sending the encrypted information and the key pair identifier to a server further comprises:
sending corresponding business scenario information to the server to generate a corresponding business receipt.

13. A payment method based on a near field communication NFC portable device, comprising:
receiving, by a server from a consumption machine, a key pair identifier sent and encrypted information that comprises expense information, wherein the encrypted information is generated by the NFC portable device by using a public key corresponding to the key pair identifier, and is sent to the consumption machine by using an NFC communication method;
determining, based on the key pair identifier, a private key corresponding to the key pair identifier, and decrypting the encrypted information by using the private key to obtain the expense information; and
deducting, based on the expense information, money from a user account that is pre-associated with the key pair identifier.

14. The method according to claim 13, wherein before the receiving, from a consumption machine, a key pair identifier and encrypted information that comprises expense information, the method further comprises:
generating the key pair identifier and a key pair corresponding to the key pair identifier in advance;
associating the key pair identifier and the key pair with the user account; and
sending the key pair identifier and the public key in the key pair, wherein an NFC writing end writes the sent information into the NFC portable device.

15. The method according to claim 14, wherein the receiving a key pair identifier and encrypted information that comprises expense information further comprises:
receiving, from the consumption machine, account identification information of the user account, wherein the account identification information is sent by the NFC portable device to the consumption machine by using an NFC communication method; and
the determining, based on the key pair identifier, a private key corresponding to the key pair identifier comprises:
determining, based on the account identification information, key pair identifiers corresponding to the user account; and
determining, based on the key pair identifiers and the key pair identifier sent by the consumption machine, the private key corresponding to the key pair identifier sent by the consumption machine.

16. The method according to claim 13, wherein the encrypted information further comprises a current time obtained by the NFC portable device; and
before the deducting, based on the expense information, money from a user account that is pre-associated with the key pair identifier, the method further comprises:
determining effectiveness of the current time based on the time of the server.

17. A payment apparatus based on a near field communication NFC portable device, wherein the apparatus is located in the NFC portable device and comprises:
an acquisition module, configured to obtain NFC writing information, wherein the NFC writing information comprises a key pair identifier and a public key corresponding to the key pair identifier;
a receiving module, configured to: when entering the NFC communication range of a consumption machine, receive expense information sent by the consumption machine;
an encryption module, configured to encrypt the expense information by using the public key to obtain encrypted information; and
a sending module, configured to send the encrypted information and the key pair identifier to the consumption machine, wherein after decrypting the encrypted information, a server deducts, based on the expense information, money from a user account that is pre-associated with the key pair identifier.

18. The apparatus according to claim 17, wherein the server generates in advance the key pair identifier and the key pair corresponding to the key pair identifier, and sends the key pair identifier and the public key in the key pair, and wherein an NFC writing end writes the sent information into the NFC portable device.

19. The apparatus according to claim 17, wherein the NFC writing information further comprises account identification information of the user account associated with the key pair identifier; and
that the sending module sends the encrypted information and the key pair identifier to the consumption machine further comprises:
the sending module sends the account identification information to the consumption machine for the server to find a private key for the decryption in the key pair.

20. The apparatus according to claim 17, wherein that the encryption module encrypts the expense information by using the public key to obtain the encrypted information comprises:
the encryption module obtains a current time; and
encrypts the expense information and the current time by using the public key to obtain the encrypted information,
wherein the current time is used by the server to perform timeliness verification before the deduction.

21. The apparatus according to any one of claims 17 to 20, wherein the NFC portable device is an NFC-enabled wearable device or a card.

22. A writing apparatus for a near field communication NFC portable device, wherein the apparatus is located at an NFC writing end and comprises:
an acquisition module, configured to obtain a key pair identifier associated with a user account and a public key in a key pair corresponding to the key pair identifier; and
a writing module, configured to write the key pair identifier and the public key into the NFC portable device, wherein the NFC portable device uses the key pair identifier and the public key to pay through the user account.

23. The apparatus according to claim 22, wherein that the acquisition module obtains the key pair identifier associated with the user account and the public key in the key pair corresponding to the key pair identifier comprises:
the acquisition module requests a server to generate the key pair identifier associated with the user account and the key pair corresponding to the key pair identifier; and
receives the key pair identifier and the public key in the key pair returned by the server;
wherein when the NFC portable device pays through the user account, deduction is made by the server.

24. The apparatus according to claim 23, wherein that the acquisition module obtains the key pair identifier associated with the user account and the public key in the key pair corresponding to the key pair identifier further comprises:
the acquisition module obtains account identification information of the user account; and
that the writing module writes the key pair identifier and the public key into the NFC portable device further comprises:
the writing module writes the account identification information into the NFC portable device for the server to find a private key for the deduction in the key pair.

25. The apparatus according to claim 22, further comprising:
a cancel module, configured to request the server to cancel the association relationship between the user account and the key pair identifier, wherein if the association relationship is canceled, the NFC portable device cannot successfully pay based on the key pair identifier.

26. A payment apparatus based on a near field communication NFC portable device, wherein the apparatus is located in a consumption machine and comprises:
a first sending module, configured to: when the NFC portable device enters the NFC communication range of the consumption machine, send expense information to the NFC portable device;
a receiving module, configured to receive, from the NFC portable device, a key pair identifier and encrypted information obtained by encrypting the expense information by using a public key corresponding to the key pair identifier, wherein the key pair identifier and the public key are written into the NFC portable device in advance; and
a second sending module, configured to send the encrypted information and the key pair identifier to a server, wherein after decrypting the encrypted information, the server deducts, based on the expense information, money from a user account that is pre-associated with the key pair identifier.

27. The apparatus according to claim 26, wherein that the receiving module receives, from the NFC portable device, the key pair identifier and the encrypted information obtained by encrypting the expense information by using the public key corresponding to the key pair identifier further comprises:
the receiving module receives account identification information of the user account sent by the NFC portable device, wherein the account identification information is written into the NFC portable device in advance;
wherein that the second sending module sends the encrypted information and the key pair identifier to the server further comprises:
the second sending module sends the account identification information to the server for finding a private key for the decryption in the key pair.

28. The apparatus according to claim 26, wherein that the second sending module sends the encrypted information and the key pair identifier to the server further comprises:
the second sending module sends corresponding business scenario information to the server to generate a corresponding business receipt.

29. A payment apparatus based on a near field communication NFC portable device, wherein the apparatus is located in a server and comprises:
a receiving module, configured to receive, from a consumption machine, a key pair identifier and encrypted information that comprises expense information, wherein the encrypted information is generated by the NFC portable device by using a public key corresponding to the key pair identifier, and is sent to the consumption machine by using an NFC communication method;
a determining module, configured to determine, based on the key pair identifier, a private key corresponding to the key pair identifier, and decrypt the encrypted information by using the private key to obtain the expense information; and
a deduction module, configured to deduct, based on the expense information, money from a user account that is pre-associated with the key pair identifier.

30. The apparatus according to claim 29, further comprising:
an association sending module, configured to: before the receiving module receives, from the consumption machine, the key pair identifier and the encrypted information that comprises the expense information, generate the key pair identifier and the key pair corresponding to the key pair identifier in advance, and associate the key pair identifier and the corresponding key pair with the user account; and
send the key pair identifier and the public key in the key pair, so an NFC writing end writes the sent information into the NFC portable device.

31. The apparatus according to claim 30, wherein that the receiving module receives, from the consumption machine, the key pair identifier and the encrypted information that comprises the expense information further comprises:
the receiving module receives account identification information of the user account sent by the consumption machine, wherein the account identification information is sent by the NFC portable device to the consumption machine by using the NFC communication method; and
that the determining module determines, based on the key pair identifier, the private key corresponding to the key pair identifier comprises:
the determining module determines, based on the account identification information, key pair identifiers corresponding to the user account; and
determines, based on the key pair identifiers and the key pair identifier sent by the consumption machine, the private key corresponding to the key pair identifier sent by the consumption machine.

32. The apparatus according to claim 29, wherein the encrypted information further comprises a current time obtained by the NFC portable device; and
before deducting, based on the expense information, money from the user account that is pre-associated with the key pair identifier, the deduction module further:
determines effectiveness of the current time based on the time of the server.

33. A payment device based on a near field communication NFC portable device, wherein the device is the NFC portable device and comprises:
at least one processor; and
at least one memory communicatively connected to the at least one processor; wherein
the memory stores an instruction that can be executed by the at least one processor, and the instruction is executed by the at least one processor to enable the at least one processor to:
obtain NFC writing information, wherein the NFC writing information comprises a key pair identifier and a public key corresponding to the key pair identifier;
when entering the NFC communication range of a consumption machine, receive expense information sent by the consumption machine;
encrypt the expense information by using the public key to obtain encrypted information; and
send the encrypted information and the key pair identifier to the consumption machine, wherein after decrypting the encrypted information, a server deducts, based on the expense information, money from a user account that is pre-associated with the key pair identifier.

34. A writing device for a near field communication NFC portable device, wherein the device is an NFC writing end and comprises:
at least one processor; and
at least one memory communicatively connected to the at least one processor; wherein
the memory stores an instruction that can be executed by the at least one processor, and the instruction is executed by the at least one processor to enable the at least one processor to:
obtain a key pair identifier associated with a user account and a public key in a key pair corresponding to the key pair identifier; and
write the key pair identifier and the public key into the NFC portable device, wherein the NFC portable device uses the key pair identifier and the public key to pay through the user account.

35. A payment device based on a near field communication NFC portable device, wherein the device is a consumption machine and comprises:
at least one processor; and
at least one memory communicatively connected to the at least one processor; wherein
the memory stores an instruction that can be executed by the at least one processor, and the instruction is executed by the at least one processor to enable the at least one processor to:
when the NFC portable device enters an NFC communication range of the consumption machine, send expense information to the NFC portable device;
receive, from the NFC portable device, a key pair identifier and encrypted information obtained by encrypting the expense information by using a public key corresponding to the key pair identifier, wherein the key pair identifier and the public key are written into the NFC portable device in advance; and
send the encrypted information and the key pair identifier to a server, wherein after decrypting the encrypted information, the server deducts, based on the expense information, money from a user account that is pre-associated with the key pair identifier.

36. A payment device based on a near field communication NFC portable device, wherein the device is a consumption machine and comprises:
at least one processor; and
at least one memory communicatively connected to the at least one processor; wherein
the memory stores an instruction that can be executed by the at least one processor, and the instruction is executed by the at least one processor to enable the at least one processor to:
receive, from the consumption machine, a key pair identifier and encrypted information that comprises expense information, wherein the encrypted information is generated by the NFC portable device by using a public key corresponding to the key pair identifier, and is sent to the consumption machine by using an NFC communication method;
determine, based on the key pair identifier, a private key corresponding to the key pair identifier, and decrypt the encrypted information by using the private key to obtain the expense information; and
deduct, based on the expense information, money from a user account that is pre-associated with the key pair identifier.
